# FASCICULE DE BREVET EUROPEEN

(11) **EP 2 517 805 B1**
(45) Date de publication et mention de la délivrance du brevet: **01.01.2014**
(21) Numéro de dépôt: 12165019.6
(22) Date de dépôt: 20.04.2012
(51) Int. Cl.: B21D 53/10, B21D 53/16, B60G 15/06, F16C 33/64

(54) **Procédé de fabrication de deux rondelles comprenant chacune une piste de roulement**
Herstellungsverfahren von zwei Laufringen, von denen jeder eine Laufpiste umfasst
Method for manufacturing two washers each comprising a raceway

(30) Priorité: 29.04.2011 FR 1153695
(43) Date de publication de la demande: 31.10.2012
(73) Titulaire: NTN-SNR Roulements, 74000 Annecy (FR)
(72) Inventeur: Chamousset, Anthony, 74150 Salles (FR); Lefevre, Damien, 74940 Annecy le Vieux (FR)
(74) Mandataire: Sayettat, Julien Christian

(56) Documents cités:
- EP-A1- 1 425 192
- DE-A1- 19 923 847
- FR-A1- 2 851 500

## Description

L'invention concerne un procédé de fabrication de deux rondelles comprenant chacune une piste de roulement.

On connaît du document EP-1 425 192 une butée de suspension comprenant deux rondelles de roulement qui sont fabriquées dans un même flan de matériau, lesdites rondelles étant d'abord réalisées dans ledit flan puis séparées l'une de l'autre.

Par rapport à la fabrication de chacune des rondelles dans un flan distinct, cette réalisation permet une économie de matière ainsi qu'une simplification de la réalisation des rondelles, notamment par emboutissage.

Toutefois, elle impose que le diamètre intérieur d'une rondelle soit égal au diamètre extérieur de l'autre rondelle et le document EP-1 425 192 prévoit la réduction du rayon d'au moins une piste de roulement et/ou du diamètre intérieur de la rondelle de plus grand diamètre, afin d'éviter d'endommager les corps roulants en cas d'effort axial important.

Toutefois, cette réduction étant faite postérieurement à la réalisation des rondelles, le recouvrement entre les diamètres respectivement extérieur et intérieur des rondelles est forcément réduit ce qui, en limitant le maintien des corps roulants entre les pistes de roulement, nuit à la rigidité de la butée intégrant ces rondelles.

L'invention vise à pallier les problèmes de l'art antérieur en proposant notamment un procédé de fabrication de deux rondelles dans un même flan qui permet d'obtenir de façon simple un recouvrement important entre les diamètres respectivement extérieur et intérieur desdites rondelles, ainsi qu'une butée de suspension à rigidité améliorée intégrant lesdites rondelles.

A cet effet, l'invention propose un procédé de fabrication de deux rondelles comprenant chacune une piste de roulement entre lesquelles des corps roulants sont destinés à être disposés afin de permettre la rotation relative desdites rondelles, ledit procédé prévoyant les étapes successives suivantes :
- réalisation d'une première rondelle dans un flan de matériau, ladite rondelle présentant la piste de roulement ;
- découpe dudit flan pour, d'une part, séparer la première rondelle dudit flan suivant son diamètre extérieur et, d'autre part, récupérer une couronne de matériau dont le diamètre intérieur est égal audit diamètre extérieur de ladite première rondelle ;
- réduction du diamètre intérieur de la couronne ;
- réalisation de la deuxième rondelle dans la couronne, ladite rondelle présentant la piste de roulement et un diamètre intérieur qui est inférieur au diamètre extérieur de la première rondelle.

D'autres particularités et avantages de l'invention apparaîtront dans la description qui suit, faite en référence aux figures jointes, dans lesquelles :
- la figure 1 illustre les différentes étapes de la mise en oeuvre d'un procédé de fabrication selon un mode de réalisation de l'invention ;
- la figure 2 représente de façon partielle et en coupe axiale une butée de suspension.

Une roue d'un véhicule automobile, notamment une roue directrice, est montée sur le châssis par l'intermédiaire d'une jambe de force qui permet la suspension de la caisse relativement au sol. A cet effet, la jambe de force comprend classiquement un amortisseur, un ressort de suspension ainsi qu'une butée de suspension sur laquelle le ressort vient en appui.

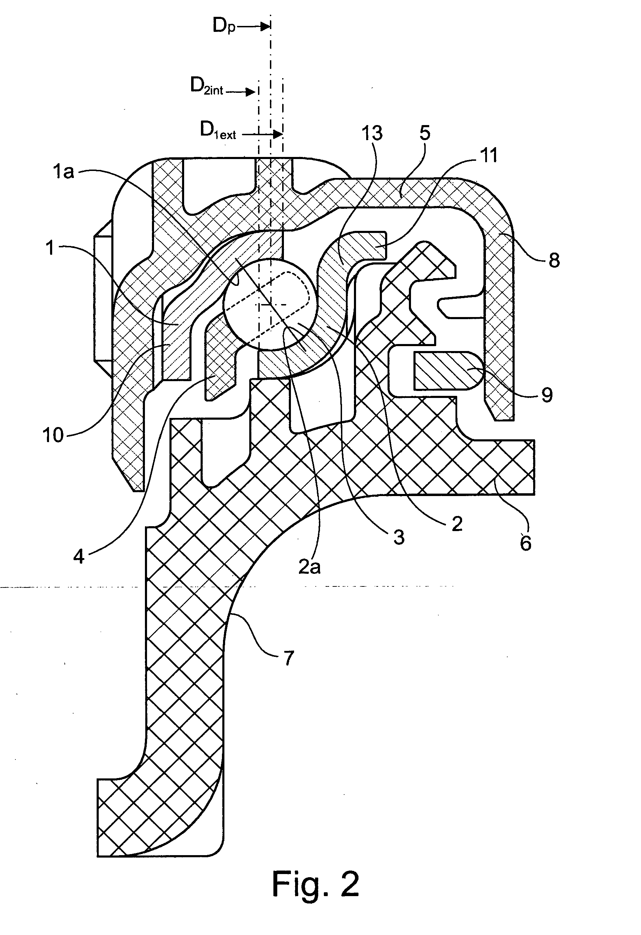

En relation avec la figure 2, on décrit ci-dessous un mode de réalisation d'une butée de suspension qui comprend une première rondelle 1 disposée au dessus d'une deuxième rondelle 2, chacune desdites rondelles comprenant une piste de roulement 1a, 2a entre lesquelles des corps roulants 3 sont disposés afin de permettre la rotation relative desdites rondelles. Par ailleurs, chacune des rondelles 1, 2 présente un diamètre intérieur D₁ᵢₙₜ, D₂ᵢₙₜ et un diamètre extérieur D₁ₑₓₜ, D₂ₑₓₜ entre lesquels est réalisée une portion toroïdale 1a, 2a formant la piste de roulement.

Dans cette description, les termes de positionnement dans l'espace sont pris en référence à l'axe de rotation de la butée de suspension (vertical sur la figure 2 qui montre un côté de la coupe, l'autre côté étant symétrique par rapport audit axe). En particulier, le terme « intérieur » est relatif à une disposition proche de cet axe et le terme « extérieur » est relatif à une disposition à distance de cet axe.

Les rondelles 1, 2 sont placés l'une sur l'autre en formant entre les pistes de roulement 1a, 2a un chemin à contact oblique dans lequel sont disposés les corps roulants qui, dans le mode de réalisation représenté, sont des billes 3 maintenus par une cage 4.

La butée de suspension comprend en outre deux pièces d'habillage 5, 6, notamment formées chacune d'une pièce réalisée par moulage d'un matériau thermoplastique rigide, par exemple de type polyamide 6.6. Ces pièces sont respectivement un couvercle 5 associé sur la première rondelle 1 pour être interposé entre le châssis et ladite première rondelle, et un support 6 associé sous la deuxième rondelle 2. Ces pièces d'habillage 5, 6 permettent notamment une reprise des efforts du ressort et éventuellement de ceux d'une butée de choc.

En particulier, le support 6 est formé d'une pièce en matériau thermoplastique sur laquelle un appui 7 pour le ressort de suspension est réalisé. Dans le mode de réalisation représenté, le support 6 est dépourvu d'insert de rigidification tel qu'une armature métallique surmoulée ou un bol métallique interposé entre le support 6 et le ressort.

Ainsi, lorsque le ressort est sollicité en compression et en détente, l'enroulement des spires de ce dernier sur elles-mêmes est modifié, ce qui entraîne la rotation de la deuxième rondelle 2 par rapport à la première 1. En outre, le braquage des roues induit également une rotation de la deuxième rondelle 2.

Dans le mode de réalisation représenté, le couvercle 5 comprend une jupe annulaire 8 formant de chaque côté du support 6 un espace annulaire entre ledit couvercle et ledit support. Ainsi, la butée comprend deux espaces annulaires latéraux qui sont formés entre les diamètres intérieurs et extérieurs du couvercle 5 et du support 6, lesdits espaces annulaires présentant un jeu de sorte à permettre la rotation du support 6 par rapport au couvercle 5 sans interférence entre ceux-ci.

La butée de suspension comprend en outre un élément d'étanchéité 9 qui est disposé dans un espace annulaire, notamment dans chacun des espaces annulaires. Dans le mode de réalisation représenté, l'espace annulaire extérieur est équipé d'un élément d'étanchéité 9 selon le document WO-2009/019340, à savoir qui est en contact frottant sur l'intérieur de la jupe 8 et monté mobile par rapport au support 6.

En variante non représentée, l'espace annulaire intérieur peut également être équipé d'un élément d'étanchéité 9 et/ou l'élément d'étanchéité 9 peut être solidaire d'une pièce d'habillage 5, 6 et être en contact frottant sur l'autre pièce d'habillage 6, 5.

En relation avec la figure 2, le centre des corps roulants 3 définit un diamètre primitif Dp qui est inférieur au diamètre extérieur D₁ₑₓₜ de la première rondelle 1 et supérieur au diamètre intérieur D₂ᵢₙₜ de la deuxième rondelle 2. Ce recouvrement des rondelles 1, 2 de part et d'autre du diamètre primitif Dp permet de fiabiliser le maintien et le guidage des corps roulants 3 entre les pistes 1a, 2a, ce qui accroît la rigidité de la butée de suspension, notamment relativement aux couples de déversement induisant une déflection radiale de la butée.

De façon avantageuse, la rigidité de la butée est améliorée lorsque:
- le rapport entre le diamètre primitif Dₚ et le diamètre extérieur D₁ₑₓₜ de la première rondelle 1 est compris entre 0,99 et 0,95, notamment entre 0,97 et 0,95 ; et/ou
- le rapport entre le diamètre intérieur D₂ᵢₙₜ de la deuxième rondelle 2 et le diamètre primitif Dp est compris entre 0,99 et 0,95, notamment entre 0,97 et 0,95.

En particulier, les diamètres extérieur D₁ₑₓₜ et intérieur D₂ᵢₙₜ peuvent être symétriques par rapport au diamètre primitif Dp de sorte à obtenir une longueur de recouvrement identique de part et d'autre dudit diamètre primitif. Dans un exemple de réalisation, le diamètre primitif Dp est de 80 mm, le diamètre extérieur D₁ₑₓₜ étant d'au moins 81 mm et le diamètre intérieur D₂ᵢₙₜ étant d'au plus 79 mm, notamment respectivement d'au moins 82 mm et 78 mm.

Toujours pour améliorer la rigidité de la butée, au moins une rondelle 1, 2 peut être rigidifiée par un puits axial 10 et/ou par une portée radiale 11. Dans le mode de réalisation représenté, la première rondelle 1 présente un puits axial intérieur 10, ledit puits permettant en outre l'association de la première rondelle 1 au couvercle 5. La deuxième rondelle 2 présente une portée radiale extérieure 11 qui s'étend sur l'extrémité libre d'une portée axiale 13, ladite portée axiale permettant l'association de la deuxième rondelle 2 au support 6.

On décrit ci-dessous un procédé de réalisation des deux rondelles 1, 2 dans un même flan 14 de matériau, de sorte à combiner l'obtention d'une butée à rigidité améliorée avec les avantages de l'utilisation d'un seul flan 14 pour réaliser les deux rondelles 1, 2.

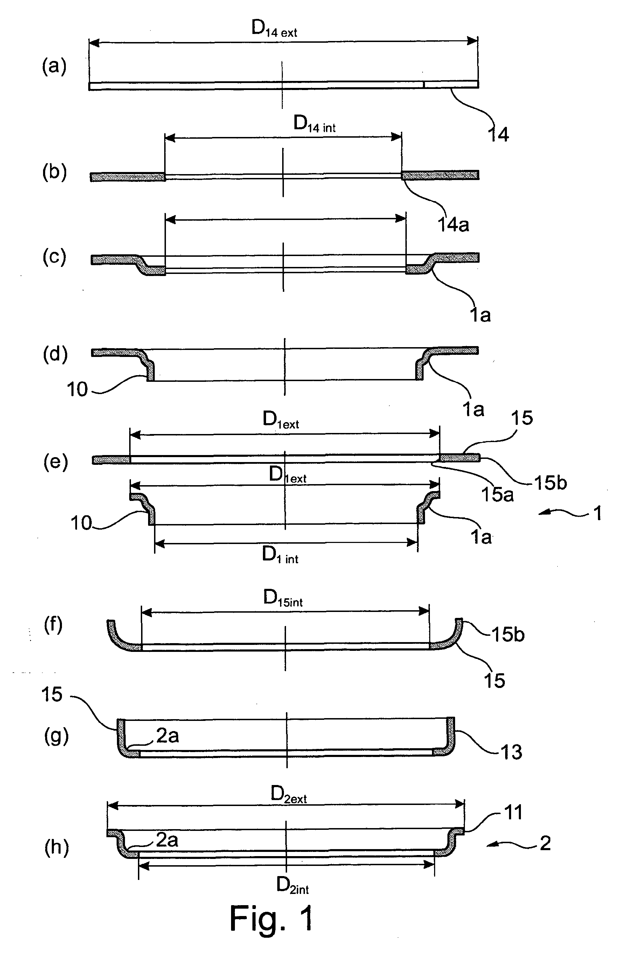

En relation avec la figure 1, le flan 14 est formé d'une tôle plane, par exemple en acier à roulement, présentant une épaisseur comprise entre 1,2 mm et 2 mm, notamment de l'ordre de 1,5 mm, ledit flan ayant été découpé (a) pour présenter un diamètre extérieur D₁₄ₑₓₜ puis défoncé (b) pour présenter un bord intérieur 14a de diamètre intérieur D₁₄ᵢₙₜ.

Ensuite, le procédé prévoit de réaliser la première rondelle 1 dans le flan 14 de matériau, ladite rondelle présentant la piste de roulement 1a. Dans le mode de réalisation représenté, la réalisation de la première rondelle 1 comprend d'abord un emboutissage (c) du flan 14 pour former la portion toroïdale 1a puis le tombage (d) du bord intérieur 14a pour réaliser le puits intérieur axial 10 de rigidification sur la première rondelle 1.

Après réalisation de la première rondelle 1, le procédé prévoit une découpe (e) du flan 14 pour, d'une part, séparer ladite première rondelle dudit flan suivant son diamètre extérieur D₁ₑₓₜ et, d'autre part, récupérer une couronne 15 de matériau dont le diamètre intérieur est égal audit diamètre extérieur de ladite première rondelle. En particulier, la couronne 15 a une géométrie plane qui s'étend entre un bord intérieur 15a et un bord extérieur 15b.

Le procédé prévoit ensuite de réduire (f) le diamètre intérieur D₁₅ᵢₙₜ de la couronne 15, notamment en réalisant un pré-emboutissage de la couronne 15 au cours duquel le bord extérieur 15b est relevé. En particulier, le diamètre intérieur D₁₅ᵢₙₜ de la couronne 15 peut être réduit d'au moins 1 % de la valeur du diamètre extérieur D₁ₑₓₜ de la première rondelle 1, notamment de 2% à 7% de cette valeur, de sorte à obtenir le recouvrement de rigidification décrit ci-dessus.

Après cette réduction, la deuxième rondelle 2 est réalisée dans la couronne 15, ladite rondelle présentant la piste de roulement 2a et un diamètre intérieur D₂ᵢₙₜ qui est inférieur au diamètre extérieur D₁ₑₓₜ de la première rondelle 1. En particulier, le diamètre intérieur D₂ᵢₙₜ peut être légèrement supérieur au diamètre D₅ᵢₙₜ après réduction, tout en étant restant inférieur au diamètre extérieur D₁ₑₓₜ, par exemple de 1 % à 5%.

Dans le mode de réalisation représenté, la réalisation de la deuxième rondelle 2 comprend d'abord un emboutissage (g) de la couronne 15 pour former la portion toroïdale 2a, le bord extérieur 15b de ladite couronne étant relevé pour être sensiblement axial. Ensuite, l'extrémité libre du bord extérieur 15b est frappée (h) pour réaliser la portée radiale extérieure 11 de rigidification sur la deuxième rondelle 2.

Selon une réalisation, le diamètre intérieur D₁₅ᵢₙₜ est réduit de l'ordre de 4% de la valeur du diamètre extérieur D₁ₑₓₜ, de sorte à avoir un recouvrement suffisant entre les rondelles 1, 2 de part et d'autre du diamètre primitif Dp. En particulier, ce recouvrement peut être utilisé pour, lors de la réalisation de la deuxième rondelle 2, formé un seuil sur ledit recouvrement, ledit seuil remontant pour envelopper les corps roulants 3 afin d'améliorer la rigidité de la butée ainsi que sa résistance aux efforts radiaux. De même, lors de la réalisation de la première rondelle 1, un seuil peut être formé sur son recouvrement avec la deuxième rondelle 2.

## Revendications

1. Procédé de fabrication de deux rondelles (1, 2) comprenant chacune une piste de roulement (1a, 2a) entre lesquelles des corps roulants (3) sont destinés à être disposés afin de permettre la rotation relative desdites rondelles, ledit procédé prévoyant les étapes successives suivantes :
- réalisation d'une première rondelle (1) dans un flan (14) de matériau, ladite rondelle présentant la piste de roulement (1a) ;
- découpe dudit flan pour, d'une part, séparer la première rondelle (1) dudit flan suivant son diamètre extérieur (D₁ₑₓₜ) et, d'autre part, récupérer une couronne (15) de matériau dont le diamètre intérieur (D₁₅ᵢₙₜ) est égal audit diamètre extérieur de ladite première rondelle ;
- réduction du diamètre intérieur (D₁₅ᵢₙₜ) de la couronne (15) ;
- réalisation de la deuxième rondelle (2) dans la couronne (15), ladite rondelle présentant la piste de roulement (2a) et un diamètre intérieur (D₂ᵢₙₜ) qui est inférieur au diamètre extérieur (D₁ₑₓₜ) de la première rondelle (1).

2. Procédé de fabrication selon la revendication 1, **caractérisé en ce que** la réalisation des rondelles (1, 2) comprend un emboutissage respectivement du flan (14) et de la couronne (15).

3. Procédé de fabrication selon la revendication 1 ou 2, **caractérisé en ce que** la réduction du diamètre intérieur (D₁₅ᵢₙₜ) de la couronne (15) est réalisée par pré-emboutissage.

4. Procédé de fabrication selon l'une quelconque des revendications 1 à 3, **caractérisé en ce que** la couronne (15) présente un bord extérieur (15b) qui est relevé lors de la réduction de son diamètre intérieur (D₁₅ᵢₙₜ) et/ou lors de la réalisation de la deuxième rondelle (2).

5. Procédé de fabrication selon la revendication 4, **caractérisé en ce que** le bord extérieur (15b) de la couronne (15) est frappé pour réaliser une portée extérieure radiale (11) sur la deuxième rondelle (2).

6. Procédé de fabrication selon l'une quelconque des revendications 1 à 5, **caractérisé en ce que** le flan (14) présente un bord intérieur (14a) qui est tombé pour réaliser un puits intérieur axial (10) sur la première rondelle (1).

7. Procédé de fabrication selon l'une quelconque des revendications 1 à 6, **caractérisé en ce que** le flan (14) et la couronne (15) sont plan préalablement à la réalisation de respectivement la première (1) et la deuxième (2) rondelle.

8. Procédé de fabrication selon l'une quelconque des revendications 1 à 7, **caractérisé en ce que** le flan (14) est formé d'une tôle présentant une épaisseur comprise entre 1,2 mm et 2 mm, notamment de l'ordre de 1,5 mm.

9. Procédé de fabrication selon l'une quelconque des revendications 1 à 8, **caractérisé en ce que** le diamètre intérieur (D₁₅ᵢₙₜ) de la couronne (15) est réduit d'au moins 1 % de la valeur du diamètre extérieur (D₁ₑₓₜ) de la première rondelle (1).

10. Procédé de fabrication selon la revendication 9, **caractérisé en ce que** le diamètre intérieur (D₁₅ᵢₙₜ) de la couronne (15) est réduit de 2% à 7% de la valeur du diamètre extérieur (D₁ₑₓₜ) de la première rondelle (1).

## Patentansprüche

1. Verfahren zur Herstellung von zwei Scheiben (1, 2), von denen jede eine Laufbahn (1a, 2a) enthält, zwischen denen Rollkörper (3) dazu bestimmt sind, so angeordnet zu werden, um die Rotation der besagten Scheiben zueinander zu ermöglichen, wobei das besagte Verfahren die folgenden sukzessiven Schritte vorsieht:
- Ausführung einer ersten Scheibe (1) in einem Materialzuschnitt (14), wobei die besagte Scheibe die Laufbahn (1a) aufweist;
- Ausschnitt des besagten Zuschnittes, um einerseits die erste Scheibe (1) entlang ihres Außendurchmessers (D₁ₑₓₜ) vom besagten Zuschnitt zu trennen, und um andererseits einen Materialkranz (15) zu erhalten, dessen Innendurchmesser (D₁₅ᵢₙₜ) gleich dem besagten Außendurchmesser der besagten ersten Scheibe ist;
- Reduzierung des Innendurchmessers (D₁₅ᵢₙₜ) des Kranzes (15);
- Ausführung der zweiten Scheibe (2) im Kranz (15), wobei die besagte Scheibe die Laufbahn (2a) aufweist, und einen Innendurchmesser (D₂ᵢₙₜ), der kleiner ist, als der Außendurchmesser (D₁ₑₓₜ) der ersten Scheibe (1).

2. Herstellungsverfahren nach Anspruch 1, **dadurch gekennzeichnet, dass** die Ausführung der Scheiben (1, 2) ein Tiefziehen von jeweils dem Zuschnitt (14) und dem Kranz (15) enthält.

3. Herstellungsverfahren nach Anspruch 1 oder 2, **dadurch gekennzeichnet, dass** die Reduzierung des Innendurchmessers (D₁₅ᵢₙₜ) des Kranzes (15) durch ein Vortiefziehen erfolgt.

4. Herstellungsverfahren nach irgendeinem der Ansprüche 1 bis 3, **dadurch gekennzeichnet, dass** der Kranz (15) einen äußeren Rand (15b) aufweist, der bei der Reduzierung seines Innendurchmessers (D₁₅ᵢₙₜ) und/ oder bei der Ausführung der zweiten Scheibe (2) aufgerichtet wird.

5. Herstellungsverfahren nach Anspruch 4, **dadurch gekennzeichnet, dass** der äußere Rand (15b) des Kranzes (15) geschlagen wird, um eine äußere radiale Auflagefläche (11) auf der zweiten Scheibe (2) zu erzeugen.

6. Herstellungsverfahren nach irgendeinem der Ansprüche 1 bis 5, **dadurch gekennzeichnet, dass** der Zuschnitt (14) einen inneren Rand (14a) aufweist, der abfallend ist, um einen axialen inneren Schacht (10) auf der ersten Scheibe (1) zu erzeugen.

7. Herstellungsverfahren nach irgendeinem der Ansprüche 1 bis 6, **dadurch gekennzeichnet, dass** der Zuschnitt (14) und der Kranz (15) vor der Ausführung von jeweils der ersten (1) und der zweiten (2) Scheibe eben sind.

8. Herstellungsverfahren nach irgendeinem der Ansprüche 1 bis 7, **dadurch gekennzeichnet, dass** der Zuschnitt (14) aus einem Blech mit einer Stärke zwischen 1,2mm und 2mm, vor allem in der Größenordnung von 1,5mm gebildet wird.

9. Herstellungsverfahren nach irgendeinem der Ansprüche 1 bis 8, **dadurch gekennzeichnet, dass** der Innendurchmesser (D₁₅ᵢₙₜ) des Kranzes (15) um zumindest 1% des Wertes des Außendurchmessers (D₁ₑₓₜ) der ersten Scheibe (1) reduziert wird.

10. Herstellungsverfahren nach Anspruch 9, **dadurch gekennzeichnet, dass** der Innendurchmesser (D₁₅ᵢₙₜ) des Kranzes (15) um 2% bis 7% des Wertes des Außendurchmessers (D₁ₑₓₜ) der ersten Scheibe (1) reduziert wird.

## Claims

1. Method of manufacturing two washers (1, 2) each comprising a rolling track (1a, 2a) between which rolling bodies (3) are intended to be placed in order to enable the relative rotation of said washers, said method providing the following successive steps:
- producing a first washer (1) from a blank (14) of material, said washer having the rolling track (1a);
- cutting said blank in order firstly to separate the first washer (1) from said blank along its outside diameter (D₁ₑₓₜ) and secondly to recover a ring (15) of material the inside diameter (D₁₅ᵢₙₜ) of which is equal to said outside diameter of said first washer;
- reducing the inside diameter (D₁₅ᵢₙₜ) of the ring (15);
- producing the second washer (2) in the ring (15), said washer having the rolling track (2a) and an inside diameter (D₂ᵢₙₜ) that is less than the outside diameter (D₁ₑₓₜ) of the first washer (1).

2. Manufacturing method according to claim 1, **characterised in that** the production of the washers (1, 2) comprises a respective stamping of the blank (14) and of the ring (15).

3. Manufacturing method according to claim 1 or 2, **characterised in that** the reduction of the inside diameter (D₁₅ᵢₙₜ) of the ring (15) is produced by pre-stamping.

4. Manufacturing method according to any one of claims 1 to 3, **characterised in that** the ring (15) has an outside edge (15b) that is raised during the reduction of its inside diameter (D₁₅ᵢₙₜ) and/or during the production of the second washer (2).

5. Manufacturing method according to claim 4, **characterised in that** the external edge (15b) of the ring (15) is stamped in order to produce a radial external length (11) on the second washer (2).

6. Manufacturing method according to any one of claims 1 to 5, **characterised in that** the blank (14) has an internal edge (14a) that is turned over in order to produce an axial internal well (10) on the first washer (1).

7. Manufacturing method according to any one of claims 1 to 6, **characterised in that** the blank (14) and ring (15) are flat prior to the production of respectively the first (1) and second (2) washer.

8. Manufacturing method according to any one of claims 1 to 7, **characterised in that** the blank (14) is formed by a metal sheet having a thickness of between 1.2 mm and 2 mm, in particular around 1.5 mm.

9. Manufacturing method according to any one of claims 1 to 8, **characterised in that** the inside diameter (D₁₅ᵢₙₜ) of the ring (15) is reduced by at least 1% of the value of the outside diameter (D₁ₑₓₜ) of the first washer (1).

10. Manufacturing method according to claim 9, **characterised in that** the inside diameter (D₁₅ᵢₙₜ) of the ring (15) is reduced by 2% to 7% of the value of the outside diameter (D₁ₑₓₜ) of the first washer (1).
